Europäisches Patentamt

European Patent Office

Office européen des brevets

(11) Publication number: **0 294 733 B1**

(12) **EUROPEAN PATENT SPECIFICATION**

(45) Date of publication of patent specification: **05.08.92**   (51) Int. Cl.5: **B29B 7/02**, B29B 7/08, B01F 5/06

(21) Application number: **88108975.9**

(22) Date of filing: **04.06.88**

(54) **Process and apparatus for mixing at least two liquids and feeding them into a mold.**

(30) Priority: **09.06.87 IT 2084987**

(43) Date of publication of application:
**14.12.88 Bulletin 88/50**

(45) Publication of the grant of the patent:
**05.08.92 Bulletin 92/32**

(84) Designated Contracting States:
**AT BE CH DE ES FR GB GR IT LI LU NL SE**

(56) References cited:
**US-A- 3 871 556**
**US-A- 4 155 508**
**US-A- 4 170 440**
**US-A- 4 308 226**

(73) Proprietor: **IMMOFINBET IMMOBILIEN FINANZ-UND BETEILIGUNGS ANSTALT**

**Vaduz(LI)**

(72) Inventor: **Lapaire, Paul**

**CH-2854 Bassecourt(JU)(CH)**

(74) Representative: **Dr. Ing. A. Racheli & C.**
**Viale San Michele del Carso, 4**
**I-20144 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention concerns a process and an apparatus to carry out mixing and feeding of elastomer material in a molding plant, in particular for polyurethane articles (for example shoe soles) and other technical items such as wheels, gears etc according to the preambles of the independent claims.

Intimate mixing of the components (monomers, cross-linking agents, catalysts, pigments, plasticizers etc.) to form a foamy product, for example, is by no means an easy operation.

A dynamic mixer often proves unsuitable because of the deposits that form around the mixer itself.

The same problem can occur in devices in which the components are mixed by taking advantage of the shearing stresses generated when the fluid components are made to flow through a special apparatus.

A device is known in which the components of the mixture are sent from the tanks, through a check valve system, to two metering cylinders which in turn deliver the components into two chambers connected by means of a hole; said chambers are equipped with pistons that move alternately to mix the components. The working principle of this apparatus is undoubtedly valid, but it too permits the formation of deposits. These can form around the check valves and ducts in particular. For each cycle there is also a dead time due to filling of the metering cylinders.

The object of the invention is to improve mixing, eliminating the possibility of deposits of the components and also improving the structure of the product obtained.

A further object is to reduce dead times in the process due both to metering of the components and to washing or cleaning of the apparatus.

The above objects have been achieved by providing, immediately upstream of the mixing chambers that operate as described above, a recirculation circuit for each component in the reaction, said circuit comprising a metering valve and being connected to the chambers by means of a three-way valve that controls feeding of the chambers and subsequent recirculation of the component as soon as the desired quantity has been fed into the chamber.

The three-way valve preferably has a plunger shutter.

The mixing chamber pistons are preferably equipped with piston rings. These make it possible to achieve high pressures, at the same time carrying out scraping of the walls of the chamber, so that no deposits of material occur.

The piston operating inside the mixing chambers are preferably operated by counter-pistons belonging to hydraulic cylinders which, to occupy the minimum space, are set parallel to each other.

The procedure provides for low-pressure recirculation (about 1-15 bar) for each component of the reaction mixture and high-pressure mixing and feeding (about 100-300 bars).

Preferably only one of the two hydraulic pistons is operated during the mixing stage; when the first has finished its stroke the second is moved and so forth. The pistons are moved alternately one at a time; when one is the motor the other is moved.

The material can be introduced into the mixing chamber, through the valve, at low pressure by eliminating pressure from the mixing circuit. Introduction can also be aided by simultaneously moving the piston inside the corresponding mixing chamber for a smaller volume than the amount of liquid introduced, so that no air is trapped in the chamber.

The apparatus according to the present invention may also comprise a valve, preferably a shutter valve, which, being suitably positioned with its outlet in a chamber, allows dyes (or other additives) to be added to the mixture.

Exemplary embodiments of the invention are illustrated in the attached drawings in which:

Fig. 1     shows a schematic view of the apparatus according to the present invention;

Fig. 2     shows an enlargement of the mixing chambers complete with valves, as well as a means of introducing an additive;

Fig. 3     shows a further enlargement of part of Fig. 2.

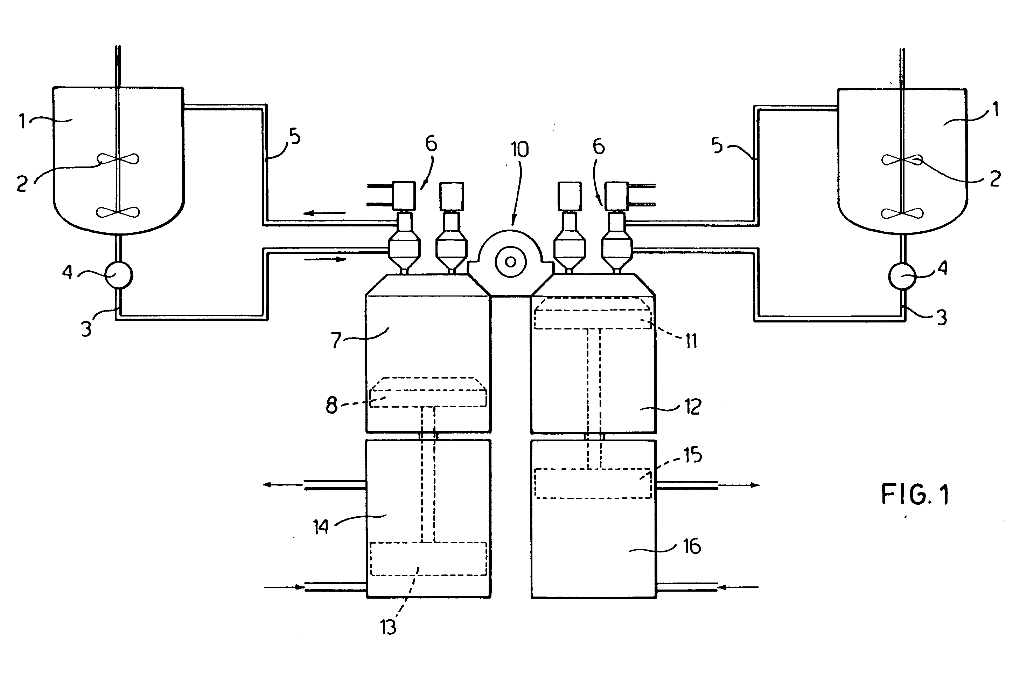

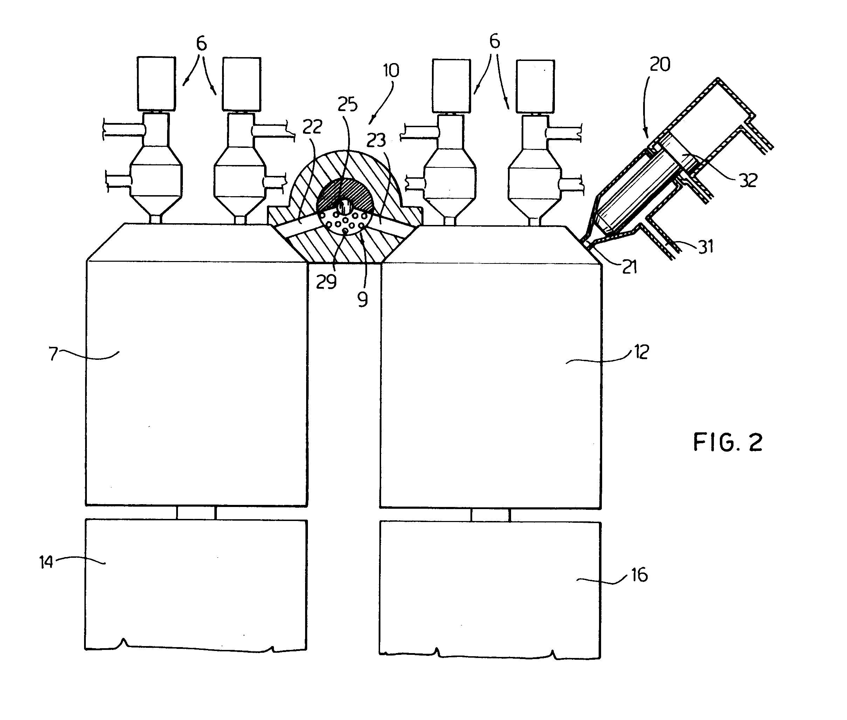

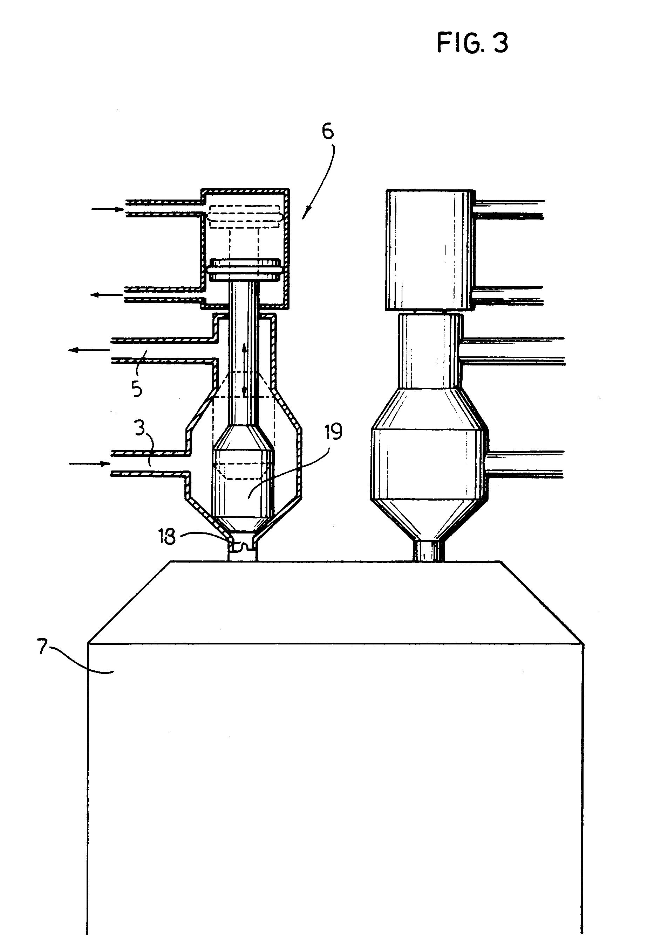

Figure 1 shows two assemblies made up of a tank 1, equipped with a stirrer 2, to the bottom of which is connected a duct 3, connected to a metering pump 4, while a return duct 5 is connected to the top. Both ducts 3 and 5 connect the tank 1 to a three-way valve 6 with a plunger shutter (shown more clearly in figures 2 and 3). In the apparatus shown in figure 1 four valves 6 are provided, leading to four tanks 1, two of which are shown in fig. 1.

Each valve 6 introduces fluid into a chamber 7 or 12 containing pistons 8 and 11 respectively. Chamber 7 is connected, by means of a baffle 9 belonging to a block 10, to chamber 12, which is identical to chamber 7. The piston 8 is integral with a counter-piston 13 belonging to an hydraulic cylinder 14, while the piston 11 is integral with a counter-piston 15 belonging to a cylinder 16, the axes of the pistons preferably being parallel.

The block 10 comprises two connections 22 and 23 that join together the tops of the two chambers 7 and 12 through a baffle 9. The latter can be made up of a series of pivots 29 arranged close together perpendicularly to the flow. A sliding rod 25, perpendicular to the axes of the pistons and the channels 22 and 23, creates the connection with the mold, or closes this connection, thus causing the mixture to pass from one chamber to the other.

The valve 6 is illustrated in detail in figure 3, where it can be seen that with the plunger shutter 19 in the raised position (hatched) the fluid is allowed to pass towards the mixing chamber 7, whereas with the shutter 19 in the lowered position the inlet 18 of chamber 7 is closed and the fluid is forced into recirculation duct 5.

Figure 2 also shows a shutter valve 20, controlled by the piston 32, positioned near the mixing chamber 12 and connected to it by means of an outlet 21. The valve 20 contains dye that is fed under pressure through the duct 31. When the shutter valve 20 is opened by acting on piston 32 it is possible to introduce the dye under pressure into the mixing chamber 12 through the outlet 21. The dye is thus added to the components of the mixture, so that it too can be mixed homogeneously together with the other components contained in the mixing chambers. The dye thus introduced comes to form an integral part of the mixture which is then expelled each time the mold is fed. In this manner the mixing chambers also containing the dye are cleaned by the scraper rings of the pistons each time the mold is fed, thus making it possible to use different dyes even immediately after each other without having to wash the apparatus.

Moreover the valve 20 (or other similar valves) can also contain other additives, such as plasticizers, self-extinguishers etc.

The apparatus illustrated carries out mixing of the fluid components of a polyurethane plastic material for molding, then feeds said material into the mold; it operates as described below.

At rest each tank 1 circulates the component by means of the metering pump 4, the pipe 3, the valve 6 in the recirculating position (figure 3) and the return pipe 5.

When a mixture is to be formed two valves 6 are operated to interrupt recirculation and feed the respective component into chamber 7 and chamber 12 respectively. When an established amount of fluid is introduced into chamber 7 and/or 12, valves 6 are operated again in the opposite direction, so that each component of the reaction continues to circulate returning to its respective tank 1 through the duct 5. In this way the material is recirculated at a pressure of 1 to 15 bars, avoiding any standing and thus any possibility of deposits forming. Once chambers 7 and 12 have been filled, a single piston 8 or 11 is operated, making it perform a working stroke. During this stroke the other piston moves only because it is operated by the fluid being mixed. During the next stroke the piston that was previously moved is operated, thus now becoming the motor, while the first piston switches from motor to moved. This alternating movement of cylinders 16 and 14 causes the components of the mixture to pass from chamber 7 to chamber 12 and vice versa, through the baffle 9. There always being only one motor piston, the one that pushes, no air can be let into the mixture. After a set number of passages, during which the fluid is subjected to a pressure of 100 to 300 bars, intimate mixing of the components is achieved. At this point the sliding rod 25 is operated, bringing about communication between connections 22 and 23 and the mold. At the same time pistons 8 and 11 operate in the same direction (at this stage both cylinders 14 and 16 are motors) to feed the material, through a nozzle belonging to block 10. The pistons 8 and 11 being equipped with piston rings to scrape the walls of chambers 7 and 12 and suitably shaped to adhere perfectly to the walls of their respective mixing chambers, at the end of the feeding operation the volume of chambers 7 and 12 is zero, so that no deposit remains in them. They are thus ready to receive a new amount of components.

## Claims

1. An apparatus for mixing and feeding liquid elastomer material comprising two chambers (7 and 12) connected by a baffle separator (9) and equipped with pistons (8 and 11), which by their alternating back and forth motion carry out intimate mixing of the components, then by their simultaneous motion carry out feeding into the mold, characterized in that upstream of the mixing chambers (7 and 12) a recirculation circuit is provided for each component, directly connecting each component tank with its respective chamber by means of a three-way valve (6), said valve controlling introduction and recirculation of each component in the reaction.

2. An apparatus according to claim 1, characterized in that the pistons (8 and 11) of the mixing chambers (7 and 12) are provided with piston rings.

3. An apparatus according to claim 1 or 2, characterized in that the pistons (8 and 11) operating inside the mixing chambers (7 and 12) have parallel axes and are operated by counter-pistons (13 and 15) belonging to hydraulic cylinders (14 and 16).

4. An apparatus according to any one of the preceding claims, characterized in that it comprises a valve (20) suitably positioned with an outlet (21) in a chamber (12) for addition of a dye to the mixture.

5. An apparatus according to any one of the preceding claims, characterized in that the three-way valves (6) are provided with a plunger shutter (19).

6. An apparatus according to any one of the preceding claims, characterized in that the baffle separator (9) is made up of a series of pivots (29) set perpendicularly to the flow.

7. A procedure for mixing and feeding plastic elastomer materials obtained by reaction of at least two components in an apparatus comprising two chambers (7, 12) connected by a baffle separator (9) and equipped with pistons (8, 11), characterized in that each of these components is brought right to the mixing chambers by a low-pressure (less than 15 bars) recirculation circuit (3, 5) and that the mixing operations are carried out at a pressure of 100-300 bars.

8. A procedure according to claim 7, characterized in that as a component is introduced into the mixing chambers (7, 12) there is a small movement of the piston (8, 11) contained inside the chamber, the size of said movement being less than the actual filling stroke.

9. A procedure according to claim 7 or 8, characterized in that during the mixing stage only one piston (8, 11) at a time is operated, alternating the motor phases of one with the idle phases of the other, so that during each stroke only one piston, the pressing one, is a motor, whereas the other is moved by the mixture itself, so that no air is taken into the mixture.

## Revendications

1. Appareil pour mélanger et alimenter des matières élastomères liquides comprenant deux chambres (7 et 12) reliées par une cloison de séparation (9) et munies de pistons (8 et 11), qui par leur mouvement de va-et-vien alterné effectuent le mélange intime des composants, et ensuite avec leur mouvement simultané assurent l'alimentation du moule, caractérisé en ce que en amont des chambres de mélange (7 et 12) on a prévu, pour chaque composant du mélange, un circuit de circulation reliant directement chacun des réservoirs des composants à une chambre correspondante par l'intermédiaire d'une valve (6) à trois voies, cette valve commandant l'arrivée et la recirculation de chacun des composants de la réaction.

2. Appareil selon la revendication 1, caractérisé en ce que les pistons (8 et 11) des chambres de mélange (7 et 12) sont munis de segments.

3. Appareil selon la revendication 1 ou 2, caractérisé en ce que les pistons (8 et 11) qui opèrent à l'intérieur des chambres de mélange (7 et 12) ont des axes parallèles et qu'ils sont actionnés par des contre-pistons (13 et 15) appartenant à des cylindres hydrauliques (14 et 16).

4. Appareil selon n'importe laquelle des revendications précédentes, caractérisé en ce qu'il comprend une valve (20) placée de sorte qu'elle ait un écoulement (21) dans une chambre (12) pour l'ajout d'un colorant au mélange.

5. Appareil selon n'importe laquelle des revendications précédentes, caractérisé en ce que les valves (6) à trois voies sont munies d'un obturateur plongeur (19).

6. Appareil selon n'importe laquelle des revendications précédentes, caractérisé en ce que la cloison de séparation (9) se compose d'une série de pivots (29) disposés perpendiculairement au flux.

7. Procédé pour le mélange et l'alimentation de matières plastiques élastomères obtenues par la réaction d'au moins deux composants, dans un appareil comprenant deux chambres (7, 12) reliées par une cloison de séparation (9) et munies de pistons (8, 11), caractérisé en ce que chacun de ces composants est immédiatement introduit dans les chambres de mélange par un circuit de recirculation (3, 5) à basse pression (au-dessous de 15 bars) et que les opérations de mélange et d'alimentation sont effectuées à une pression de 100-300 bars.

8. Procédé selon la revendication 7, caractérisé en ce que lorsqu'on introduit un composant dans les chambres de mélange, il y a un petit déplacement du piston (8, 11) contenu dans cette même chambre, ce déplacement étant inférieur à la course effective de remplissage.

9. Procédé selon la revendication 7 ou 8, caractérisé en ce que durant la phase de mélange on n'actionne qu'un seul piston (8, 11) à la fois, en alternant les phases motrices de l'un aux phases mortes de l'autre, de sorte que pendant chaque course un seul piston, celui qui pousse, est moteur, tandis que l'autre est déplacé par le mélange lui-même, de façon à éviter l'introduction d'air dans le mélange.

**Patentansprüche**

1. Apparat zum Mischen und Zuführen von flüssigem Elastomerkunststoff, der zwei Kammern (7 und 12) umfaßt, die miteinander über eine Scheidewand (9) verbunden und mit Kolben (8 und 11) versehen sind, welche bei deren alternierender Auf- und Abbewegung das tiefe Mischen der Bestandteile und darauf bei deren gleichlaufender Bewegung das Speisen der Form durchführen, dadurch gekennzeichnet, daß stromaufwärts von den Mischungskammern (7, 12) und für jeden Mischungsbestandteil ein Rezirkulationskreislauf vorgesehen ist, der jeden Behälter des einen Bestandteiles mit einer entsprechenden Kammer über einen Dreiwegeschieber (6) verbindet, wobei dieser Schieber die Zuführung und die Rückströmung jedes Bestandteiles der Reaktion steuert.

2. Apparat nach Anspruch 1, dadurch gekennzeichnet, daß die Kolben (8 und 11) der Mischungskammern (7 und 12) mit Kolbenringen versehen sind.

3. Apparat nach Anspruch 1 oder 2, dadurch gekennzeichnet, daß die innerhalb der Mischungskammern (7 und 12) wirkenden Kolben (8 und 11) zueinander parallele Achsen haben und durch Hydrozylindern (14 und 16) angehörende Gegenkolben (13 und 15) angetrieben werden.

4. Apparat nach irgendeinem der vorhergehenden Ansprüche, dadurch gekennzeichnet, daß er einen vorteilhaft mit einer Mündung (21) in eine Kammer (12) positionierten Schieber (20) umfaßt, damit ein Farbstoff der Mischung zugegeben wird.

5. Apparat nach irgendeinem der vorhergehenden Ansprüche, dadurch gekennzeichnet, daß die Dreiwegeschieber (6) mit einem Kolbenverschluß (19) versehen sind.

6. Apparat nach irgendeinem der vorhergehenden Ansprüche, dadurch gekennzeichnet, daß die Scheidewand (9) aus einer Serie Zapfen (29) besteht, die senkrecht zum Fluß gelagert sind.

7. Verfahren zum Mischen und Zuführen von aus der Reaktion wenigstens zweier Bestandteile gewonnenen Elastomerkunststoffen innerhalb eines Apparates, der zwei miteinander über eine Scheidewand (9) verbundene und mit Kolben (8, 11) versehene Kammern (7, 12) umfaßt, dadurch gekennzeichnet, daß jeder dieser Bestandteile unmittelbar den Mischungskammern über einen Rezirkulationskreislauf (3, 5) mit einem niedrigen Druck (weniger als 15 Bar) zugeführt wird und daß die Arbeitsstufen der Mischung und Zuführung unter einem Druck von 100-300 Bar durchgeführt werden.

8. Verfahren nach Anspruch 7, dadurch gekennzeichnet, daß beim Zuführen eines Bestandteiles in die Mischungskammern eine geringe Verschiebung des innerhalb der Kammer selbst enthaltenen Kolbens (8, 11) stattfindet, wobei das Maß dieser Verschiebung niedriger als der wirkliche Füllungshub ist.

9. Verfahren nach Anspruch 7 oder 8, dadurch gekennzeichnet, daß bei der Mischungsstufe jedesmal immer nur ein Kolben (8, 11) betätigt wird, indem die Antriebsphasen des einen und die Leerlaufsphasen des anderen derart abwechselnd aufeinanderfolgen, daß bei jedem Hub nur ein Kolben - nähmlich der Druckkolben - Antrieb ist, während der andere von der Mischung selbst angetrieben ist, wodurch das Eindringen von Luft in die Mischung verhindert wird.

FIG.1

FIG. 2

FIG. 3